(19)

Europäisches
Patentamt
European
Patent Office
Office européen
des brevets

(11)     **EP 3 973 792 A1**

(12)     **EUROPEAN PATENT APPLICATION**

(43) Date of publication:
**30.03.2022 Bulletin 2022/13**

(21) Application number: **21159803.2**

(22) Date of filing: **28.02.2021**

(51) International Patent Classification (IPC):
***A23L 33/00*** *(2016.01)*

(52) Cooperative Patent Classification (CPC):
**A23L 33/40**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **25.09.2020 IT 202000022738**

(71) Applicant: **Ovidia Food S.r.l.**
**36100 Vicenza (IT)**

(72) Inventor: **Bonetto, Davide**
**36100 Vicenza (IT)**

(74) Representative: **Leganza, Alessandro**
**Via Sottopasso, 14**
**36040 Torri di Quartesolo (VI) (IT)**

(54)     **FOOD FORMULATION**

(57)     Food formulation, suitable in use for replacing a traditional meal of a user, wherein the formulation is in the form of a powder or drink comprising a food liquid in which the powder is dissolved, comprising at least one first ingredient or main ingredient, at least a second ingredient or protein ingredient, at least a third ingredient or lipidic ingredient and micronutrients comprising at least one vitamin and/or at least one mineral, wherein the food formulation further comprises at least one probiotic agent and at least one prebiotic component; method for its production and use of the food formulation to replace at least one daily meal for a user.

**EP 3 973 792 A1**

**Description**

TECHNICAL FIELD OF THE INVENTION

The present invention refers to a food formulation comprising a set of ingredients able to provide the user with all macronutrients (proteins, carbohydrates, fibers, lipids) and micronutrients (vitamins and mineral salts or minerals) necessary for his daily requirement, as well as comprising probiotics and prebiotics.

More specifically, the present invention refers to a food formulation which constitutes a food, for the replacement of a daily meal, substantially ready for use by a user.

STATE OF THE PRIOR ART

Over the years, people's eating habits have radically changed and today the percentage of people who lunch at home has drastically reduced compared to the past.

The propensity to cook has also decreased substantially, mainly due to lack of time.

In conjunction with this, the number of people who eat away from home has increased and also the number of places where this can take place; these places - due to the reduced time available to consumers - offer for the most part a fast service, that is fast, which allows to eat quickly, with standardized foods and unfortunately often to the detriment of the quality of the raw material used and the nutritional value of the offered meals.

Recently, however, a good part of users of ready and fast meals have started to look for the quality of food and possibly a good nutritional balance, feeling the need for fast alternatives, possibly cheap, but healthy and daily consumable. Thus, the offer of meals ready in a few minutes has taken hold, such as ready meals to be heated in the microwave, pre-packaged soups and salads, energy bars that replace meal and actual replacement meals, often for slimming purposes.

All these "alternative meals", however, have a common defect: they can only be an occasional choice because they are not complete or balanced from a nutritional point of view and are often not even sufficient for the caloric needs of those who use them.

These replacement meals also often have an excess of simple sugars that generate glycemic peaks, drowsiness, and fatigue after use.

In the ready meals sector, a rapidly expanding novelty is that of the so-called *Complete Foods* or complete foods, i.e. foods that constitute a new generation replacement meal able to provide a correct caloric needs.

They can be in the form of powder or liquid, in the solid form for example of bars, sometimes single portion, ready to prepare (for example, just dissolve the powder in water or other liquid), or immediately consumable as they are. The latest generation *Complete foods* are even in the form of actual "food", i.e. noodles, candies, etc. However, they have some disadvantages, such as being usually biased in favor of proteins with respect to carbohydrates, with long-term risks of overloading the liver and kidneys, and that they still contain added sweeteners or sugars to increase palatability.

There is therefore a need for a food formulation or a food of *Complete food* type that is quick to consume but able to provide the right calorie count and balanced nutritional value for the user.

AIMS OF THE INVENTION

The present invention has the technical task of improving the state of the art in the field of complete or replacement meals.

As part of this technical task, an aim of the present invention is to provide a food formulation that is complete and balanced from a nutritional and caloric point of view. A further object of the present invention is to provide a food formulation that can be used in a simple and fast way, even daily, as a substitute for a traditional meal.

A still further object of the present invention is to provide a food formulation with a low cost.

According to an aspect of the present invention, a formulation according to claim 1 is provided.

The dependent claims refer to preferred and advantageous forms of the invention.

EMBODIMENTS OF THE INVENTION

The present invention relates to a food formulation.

This food formulation comprises a set of ingredients that able to provide the user with all macronutrients (proteins, carbohydrates, fibers, lipids) and micronutrients (vitamins and mineral salts or minerals) necessary for his/her daily requirement, and also comprises probiotics and prebiotics.

This food formulation constitutes a complete food or food product from a nutritional point of view, that is it belongs to the *Complete foods* category. Therefore, it is a food formulation which is suitable in use for replacing a meal of a user, instead of at least one of the traditional meals, such as breakfast, morning snack, lunch, afternoon snack and dinner.

This food formulation therefore acts as a food or meal or food substitute; in fact, it can also be taken daily or, if desired, even several times a day. As will be better described below, this food formulation is substantially ready for use by a user.

The food formulation of the invention proposes the subdivision of the nutritional content and/or macronutrients (carbohydrates, proteins, fats, and fibers) typical of the Mediterranean Diet.

For example, referring to the RENIs (Recommended Energy and Nutrient Intakes), which are the recommendations periodically elaborated by the SINU (Italian Society of Human Nutrition) and which provide dietary indications relating to the minimum consumption of energy, micronutrients and macronutrients for the Italian population, the proportions of macronutrients referred to the Mediterranean Diet are as follows:

- Carbohydrates: 45-65% of the daily energy requirement provided by carbohydrates, of which simple sugars: less than 15% of the daily energy requirement provided by simple sugars,
- Lipids or fats: 25-35% of the daily energy requirement provided by lipids,
- Proteins: percentage remaining, for example at least 0.9 g/kg of the user's body weight per day, or for example comprised between 10% and 30% or at least 10-15% or at least 20-25% and/or for example up to 25% -30% of the daily energy requirement provided by proteins, in which the daily energy requirement is around 2000-2200 kcal.

These parameters, typical of the Mediterranean Diet, guarantee a balanced diet, i.e. a diet that allows the maintenance of the state of health of the individual.

The food formulation of the invention reflects the aforementioned RENIs values in the nutritional content.

In addition, RENIs also provide information about the quality of the nutrients that are introduced. For example, fats must be mainly mono- and polyunsaturated (i.e. "good fats" that benefit the cardiovascular system, for example) and carbohydrates mainly with a low glycemic index. In general, foods with a low glycemic index are especially those rich in fiber, which slow down gastric emptying, decreasing the speed with which sugars enter into the blood.

According to one version of the invention, the food formulation of the invention is entirely produced in Italy.

Furthermore, in at least one version of the invention, the food formulation comprises at least 20% of the NRVs (Nutrient Reference Values) as regards the micronutrients (vitamins and mineral salts). The NRV specifies the amount of vitamins and mineral salts that a person should take to meet the daily minimum requirement of these nutrients, according to the European Regulation 1169/2011.

The percentage was chosen considering that the food formulation according to the invention (or a dose/portion of food formulation) corresponds to and/or constitutes a daily meal for a user (out of the total of the five recommended daily meals and listed above). Therefore, the ratio of micronutrients with respect to the total was also 1:5, corresponding to 20% of the daily requirement.

Similarly, a dose/portion of food formulation corresponds to about one fifth of the daily recommended calories for an adult, out of a total of about 2000-2200 kcal. The food formulation (or a dose/portion thereof), therefore provides about 400-450 kcal.

The formulation according to the present invention comprises: at least one first ingredient or main ingredient, which substantially constitutes a main source of carbohydrates for the formulation according to the present invention, at least one second ingredient or protein ingredient, which substantially constitutes a prevalent source of proteins for the formulation according to the present invention, at least a third ingredient or lipidic ingredient, which constitutes a source of lipids for the formulation according to the present invention, and a set of micronutrients.

At least one third ingredient or lipidic ingredient comprises at least one compound comprising at least one polyunsaturated fatty acid, such as for example an α-linolenic acid (omega 3) and/or a linoleic acid (omega 6). In at least one version of the invention, at least one third ingredient or lipidic ingredient comprises at least one component comprising omega 3 and omega 6.

This means that at least one third ingredient or lipidic ingredient is a full-fledged food that comprises a higher percentage of lipids or fatty acids, but which may also comprise other nutrients, both macro- and micronutrients. However, being composed for the most part of lipids or fatty acids, at least one third ingredient or lipidic ingredient is the main source of this type of macronutrients for the food formulation according to the invention.

The polyunsaturated fats of the omega 3 and omega 6 range are useful for reducing the risk of cardiovascular diseases and counteracting inflammatory processes, which are very frequent, for example also in athlete.

Omega 3 and omega 6 are the only two essential fatty acids, to be introduced with the diet.

The most relevant functions of essential fatty acids are:

- building cell membranes,

- balancing the production of eicosanoids (super hormones mediators of inflammation, with a promoting or suppressing action, based on the specific eicosanoid),
- promoting metabolic balance (blood pressure, hypercholesterolemia, hypertriglyceridemia, glycaemia, etc.),
- protecting (even if sometimes indirectly) the heart and brain from vascular pathologies (atherosclerosis, thrombi, emboli),
- supporting neurological development,
- protecting the nervous system from aging,
- supporting visual function,
- optimizing the embryonic development and growth of the child.

In the food formulation according to the invention, at least one third ingredient or lipidic ingredient can comprise linseeds (as a natural source of omega 3) and/or borage oil (natural source of omega 6), so that these two essential fatty acids are balanced. In a preferred version, the food formulation comprises both linseeds and borage oil.

At least one third ingredient or lipidic ingredient may also comprise coconut fat, sunflower oil, rapeseed oil, dried fruit powder (almonds, walnuts, hazelnuts), etc.

The coconut fat is useful for lowering of low-density lipoprotein (LDL) cholesterol levels.

Even at least one third ingredient or lipidic ingredient, such as coconut fat and/or borage oil and/or oil in general, is in the form of a powder, in at least one version of the invention.

The present invention, in at least one version of the invention, is in the form of powder. Therefore, the linseeds contained in it are ground and/or reduced to powder.

According to at least one embodiment, it is a fine powder, which dissolves easily in water or food liquid.

In another version of the invention, the food formulation is in the form of drink. In this case, an example of usable dose or portion is about 100 grams of powder in 300-350 grams of water or food liquid.

In one version of the invention, the food formulation in the form of drink has the consistency of a milkshake, right about dense depending on the amount of water or food liquid contained therein.

At least one first ingredient or main ingredient comprises at least oats or oatmeal, maltodextrins for example of corn, rice, rice flour, trehalose, goji flour, moringa, moringa flour, tapioca, etc.

In one version of the invention, at least one first ingredient or main ingredient consists exclusively of oats or oat flour.

Oats is a cereal with low glycemic index, that gives the product the ability to satiate effectively. A food with a low glycemic index is very suitable, for example, for those who practices sports or has to carry out physical efforts, for example prolonged, because it provides a long-lasting energy reserve.

Oats or oat flour, being a cereal, in addition to the component that constitutes the carbohydrates (which are the majority) also comprises a percentage of proteins, vitamins, fiber and minerals. In this way, this ingredient contributes to the overall balance, not only of carbohydrates, but also of the other micro and macronutrients contained in it. The same applies to the other ingredients contained in the food formulation according to the present invention, since they are real, natural, complex, and complete ingredients or foods. Indeed, the same argument is worth for linseeds, etc.

Oats and/or oat flour and/or, in general, at least one first ingredient or main ingredient, is preferably whole. The micronutrients of the food formulation comprise vitamins and/or minerals and/or mineral salts. In one version of the invention, the food formulation comprises more vitamins and more minerals.

In a further version, the food formulation essentially comprises all vitamins and all minerals useful to humans (it is in fact a *Complete food*).

For example, the food formulation of the invention comprises 27 micronutrients.

In one version of the invention, the food formulation of the invention does not comprise fluorine. Indeed, from some studies, this mineral appears to be harmful to the body.

For example, vitamins comprise at least one of Vitamin C or Myrciaria dubia (Kunth) Mc Vaugh dry extracted fruit titrated 50% in vitamin C, vitamin E or alpha tocopheryl acetate for example 50%, choline bitartrate or Vitamin J, at least one vitamin of the group B such as vitamin B3, for example nicotinamide for example 100%, vitamin B5 or pantothenic acid for example d-pantothenate calcium or vitamin B5 100%, vitamin B6 or pyridoxine hydrochloride or vitamin B6 for example 83%, vitamin B2 or riboflavin, vitamin B1 or thiamine hydrochloride or vitamin B1 for example 99.9%, vitamin B9 or folic acid or vitamin B9 for example 100%, vitamin B8 or biotin for example 100%, vitamin B12 or cyanocobalamin or vitamin B12 100%, vitamin A and/or precursors of vitamin A, such as beta-carotene for example 10% hydro-dispersible, vitamin K1, vitamin D, vitamin D3, etc. or a mixture thereof.

The minerals may comprise potassium, for example potassium citrate for example 12%, calcium, magnesium, dolomite, for example dolomite (30%calcium-20% magnesium), iron, for example iron gluconate for example 12%, zinc, for example zinc gluconate for example 13%, manganese, for example manganese gluconate for example 12%, selenium for example yeast enriched with selenium 0.2% chromium, copper, chlorine, phosphorus, molybdenum, iodine, etc., or a mixture thereof.

At least one second ingredient or protein ingredient comprises at least one of peas, legumes, beans, chickpeas, lentils, lupins, broad beans, protein isolated from peas or chickpeas or lupins or one of the other indicated legumes, rice proteins, oat proteins, soy proteins, chickpea proteins, spirulina, etc.

Using isolated proteins, the protein content is much higher (higher than 80% for both pea and rice, for example) than the use of the components as they are.

The isolated proteins are obtained by hydrolyzation.

In at least one version of the invention, soy and soy proteins are avoided since it is a possibly allergenic or non-eco-sustainable component.

In at least one version of the invention, no milk or animal origin proteins are present in order to obtain a vegan or vegetarian food formulation.

As mentioned, also linseeds and/or the first ingredient or main ingredient contain proteins (even if in a minority percentage compared to the components under which they are classified, see respectively lipids and carbohydrates). In this way, the overall protein balance of the food formulation is given both by the contribution of the second ingredient or actual protein ingredient, and by the contribution of the other ingredients that are part of the food formulation according to the invention.

For this reason, it is possible that the food formulation according to a version of the invention includes more proteins than indicated above, i.e. also 20-25% of the daily energy requirement of proteins.

Furthermore, the food formulation according to the invention comprises at least one probiotic agent and at least one prebiotic component.

This aspect is one of the most characteristic of the present invention, since they are absent from the known formulations of replacement meals or *complete foods* present on the market.

The advantages deriving from the presence of at least one probiotic agent in conjunction with at least one prebiotic component are numerous and are indicated below.

The term "microbiota" means the set of microorganisms that populate the gastrointestinal tract (and beyond) and which are mainly represented by bacteria. These microorganisms live in a mutualistic relationship with the hosting human body so that both can benefit from it. When this balance (eubiosis) fails, a state of dysbiosis is created which will cause a state of low-grade inflammation, initially localized and subsequently, with the persistence of the inflammation, which may also affect other areas of the body. The major diseases present in the western world such as diabetes, obesity, hypertension, dysmetabolic diseases and autoimmune diseases are closely linked to an alteration of the intestinal environment.

"Probiotics" means a set of live microorganisms which, taken in adequate quantity, benefits the health of the host, while "prebiotics" means a set of substances, such as soluble fibers, especially of vegetable origin, which constitute in fact a food for probiotics. Prebiotics are fermented by the microbiota with the result of producing several substances beneficial to the body, including short-chain fatty acids (SCFAs: acetate, propionate, butyrate, lactate).

In the food formulation according to the invention, at least one prebiotic component comprises at least one derivative vegetable and/or at least one MAC (microbiota-accessible carbohydrate), such as for example at least one FOS (fructo-oligosaccharides) and/or at least one natural and/or vegetable fiber, such as for example beta-glucan.

Beta-glucan is very present in oats or oat flour, and therefore they are intrinsically present - even without being added as an additional component - in the food formulation according to the present invention.

FOS, instead, are often added as a prebiotic component added separately, compared to the other ingredients of the food formulation.

However, not all fibers are fermentable by the microbiota.

Therefore, at least one prebiotic component comprises at least one of natural fiber, beta-glucan, soluble fiber, soluble fiber of vegetable origin, at least one short-chain fatty acid (SCFA) such as acetate, propionate, butyrate, lactate, at least one vegetable derivative, food fiber, at least one MAC (microbiota-accessible carbohydrate), at least one FOS (fructo-oligosaccharides), inulin, GOS (galacto-oligosaccharides), pectin (for example derived from apple and/or pear peel), resistant starch, etc. or a mixture thereof.

Often the term MAC can be substituted for the prebiotic term.

At least one probiotic agent includes, by way of example, Bacillus coagulans. This bacillus is particularly suitable because in the form of a spore and, therefore, very resistant, and stable, suitable for being stored for a long time without risk of alteration before moment of intake.

The at least one probiotic agent can include, in addition or alternatively, Bacillus subtilis, Bifidobacterium Lactis, Lactobacillus rhamnosus, etc.

At least one probiotic agent comprises, in addition or alternatively, at least one strain of micro-encapsulated probiotic and/or encapsulated in organic microcapsules, for example composed of glyceric esters of fatty acids. Also, in this way, thanks to the protection given by the capsule, possibly organic, at least one probiotic agent does not perish during storage.

Therefore, at least one probiotic agent comprises at least one of a probiotic agent in the form of spores and/or microencapsulated, for example in an organic capsule, Bacillus coagulans, Bacillus subtilis, Bifidobacterium Lactis, Lactobacillus rhamnosus, etc. or a mixture thereof.

At least one first ingredient or main ingredient, such as oats or oat flour, is the main constituent of the food formulation according to the present invention.

For example, it constitutes 45-55% or preferably about 50% by weight of the dry weight of the food formulation according to the present invention.

At least one second ingredient or protein ingredient constitutes 15-25% or preferably about 20% by weight of the dry weight of the food formulation according to the present invention.

At least one third ingredient or lipidic ingredient constitutes 7-15% or preferably about 10-11% by weight of the dry weight of the food formulation according to the present invention.

At least one prebiotic component constitutes 10-20% or preferably about 15% by weight of the dry weight of the food formulation according to the present invention.

The weight of at least one probiotic agent, instead, depends on which probiotic is present in the food formulation according to the invention. For example, compared to Bacillus subtilis, there will be at least 200 million colony forming units (CFUs) per portion (taking into account that some of these bacilli die over time, both in the product before intake and during intake. and digestion), which corresponds to approximately 7.5 mg of Bacillus subtilis in 100 grams of formulation.

Typically, Bacillus subtilis has 30 billion CFUs per gram which corresponds to 225 million CFUs in 7.5mg (i.e. per portion).

It must always be kept in mind that a portion or dose of the formulation corresponds to one of the five daily meals (traditional), and therefore the total that can be taken, in the case that all five meals are replaced with a dose/portion of the food formulation according to the invention corresponds to 1 billion CFUs of Bacillus subtilis per day. Micronutrients constitute the remaining part of the food formulation according to the invention. For example, the vitamins can be comprised in a range from 0.1 to 0.5% by weight on the dry weight of the food formulation according to the present invention, while the minerals constitute 0.5-3% or, preferably 1.5-2% by weight on the dry weight of the food formulation according to the present invention.

A feature of the food formulation according to the invention is that it has a low Glycemic Index (GI), for example comprised between 30 and 50, so that the user of the same does not have glycemic peaks or drops after intake.

The GI is a parameter that reflects the ability and speed of a food to increase glycaemia (i.e. the concentration of glucose in the blood). The speed with which a food is digested and assimilated changes depending on the food that it is eaten and is measured by the GI.

The foods to be preferred are those with low GI because, by decreasing the speed with which sugars enter the bloodstream, they help to keep insulin secretion under control, with a set of beneficial effects for the metabolism, such as the ability to prevent severe metabolic dysfunctions such as type 2 diabetes, the possibility of following a low-calorie diet without always having the stimulus hunger, the possibility of maintaining a target weight without too many sacrifices and the ability to keep low cholesterol, since insulin is one of the factors that stimulate its production.

This food formulation is able, thanks to its ingredients, to provide energy both immediately after ingestion, and subsequently, up to about 5 hours.

The release of energy from the food formulation of the invention is substantially constant.

For example, at least one first ingredient or main ingredient of the present invention, which in one version of the invention is oats or oat flour, is very rich in fiber, therefore with a low GI (equal to about 40).

Furthermore, at least one second ingredient or protein ingredient and at least one third ingredient or lipidic ingredient present in the food formulation in question also lower the total GI of the formulation itself.

Another feature of the present invention, in at least one version of the invention, is that of being easily digested.

Thanks to the slow energy absorption, indeed, it manages not to burden the body during digestion, and therefore avoids the typical drowsiness that can occur after taking products related to known and/or traditional replacement meals.

Furthermore, in one version of the invention, the formulation does not contain corn or maltodextrin (which have a high GI). In this way, the GI of the food formulation is significantly improved compared to when these components are included.

On the contrary, proteins and fats (contained in at least one third ingredient or lipidic ingredient such as coconut fat, borage oil, linseeds, and/or other ingredients of the food formulation according to the invention) decrease also the glycemic index.

Moreover, their balanced and complete nutritional content (including also potassium mineral salt) avoids any post-prandial imbalance through the use of the complete food in question.

A still further feature of the present invention is that of having a high Chemical Index (CI). This means that the present food formulation includes ingredients that provide a high chemical index thanks to an adequate quantity of all essential amino acids. The CI is a method for evaluating the biological quality of proteins. It determines the percentage ratio between the content of each single essential amino acid (EAA), expressed in mg, and the corresponding EAA of a reference pattern considered optimal. The reference proteins are conventionally considered those of the egg to which a value of CI = 100 is attributed.

The EAA present in a lower concentration is called "limiting" and its score is considered by extension the CI of the food under consideration.

The calculation of the CI of each single amino acid (AA, both essential and non-essential ones) is performed by applying the following formula:

$$\text{Chemical Index AA} = [(\text{mg AA} \,/\, \text{g protein of the food formulation according to the invention}) \,/\, (\text{mg AA} \,/\, \text{g reference protein})] \times 100.$$

Before applying the above-mentioned formula to obtain the CI it is necessary, in order to have the correct numerator, to convert the value in grams of each single AA present in 100 g of product (data obtained from laboratory analyzes) into a value in milligrams of each single AA present in 1 gram of protein of the formulation in question. To define the denominator, the AA data of the reference protein were collected from the Tables of Nutritional Composition of Foods of CREA (Council for Agricultural Research and Analysis of Agricultural Economics) and the denominator was then obtained by calculating the value in milligrams of each single corresponding amino acid, present in 1 gram of the amino acid pattern of the egg, considered "ideal" and detected by the available databases. Then, the calculations were carried out to identify the limiting essential amino acid (LEAA) and the related CI which constitutes the CI of the food formulation of the invention. The calculations were repeated for each AA and for groups of AA (essential, branched or BCAA, sulfur).

The CI of the food formulation according to the present invention, compared to other known formulations, is significantly better in that the methionine amino acid (which can be considered for example the limiting amino acid) is present, thanks to the rice proteins and (in some cases) spirulina.

For example, the CI of the food formulation according to the present invention is higher than 39 considering the limiting methionine amino acid, and/or it is higher than 50 considering the sulfur amino acids, and/or it is higher than 83 considering the total amino acids, and/or is higher than 85 considering branched chain amino acids.

The amino acids present in the food formulation according to the invention are at least the following, in a percentage higher than or equal to that indicated in Table 1, reported below.

Table 1: List of amino acids and content in grams of the same present in 100 grams of food formulation according to the invention, as well as chemical index (CI, expressed as a percentage of the amino acid content in the formulation with respect to the "ideal" content given by the reference protein, i.e. that of the egg).

| Amino acid | Grams of amino acid | CI |
|---|---|---|
| Total of free amino acids | >16.20 | |
| Aspartic acid | >1.76 | >111,42 |
| Glutamic acid | >3.23 | >163,95 |
| Alanine | >0.73 | >77,71 |
| Arginine | >1.32 | >131,73 |
| Cysteine | >0.27 | >63,97 |
| Glycine | >0.75 | >138,01 |
| Histidine | >0.40 | >102,74 |
| Isoleucine | >0.72 | >83,88 |
| Leucine | >1.27 | >93,37 |
| Lysine | >1.01 | >87,85 |
| Methionine | >0.22 | >39,53 |
| Phenylalanine | >0.82 | >94,81 |
| Proline | >0.75 | >115,72 |
| Serine | >0.85 | >77,26 |

(continued)

| Amino acid | Grams of amino acid | CI |
|---|---|---|
| Threonine | >0.62 | >76,17 |
| Tyrosine | >0.49 | >74,55 |
| Valine | >0.81 | >75,33 |
| Tryptophan | >0.18 | >69,96 |

The food formulation according to the invention presents a optimum CI since at least one protein ingredient contained in it was selected based on the amino acid content of the proteins present in the ingredient itself and/or in the other ingredients present in the formulation.

For example, the CI of the total of essential amino acids (histidine, isoleucine, leucine, lysine, methionine, phenylalanine, threonine, tryptophan, valine) is higher than 82.42%.

The food formulation according to the invention, therefore, has an amino acid profile complete with all essential amino acids (EAAs).

For example, pea proteins (which are the main protein source in at least one version of the formulation) have a high content of the essential amino acids, tyrosine, valine, threonine, serine, alanine. Despite having a low content of methionine, cysteine /cystine and tryptophan, methionine is present in high quantities in oat flour, in rice proteins there is a high amount of cysteine /cystine, in addition to methionine itself, and finally tryptophan is present in high quantities in linseeds.

Thanks to the combination of these compounds present in the food formulation in question, an extraordinarily high CI is obtained.

In at least one version of the invention, the food formulation contains spirulina, with a very high content of methionine.

Therefore, the food formulation of the invention has a better CI than other products, thanks to the addition of oat flour and/or rice proteins and/or (in some versions) of spirulina.

Therefore, the total percentage of proteins, carbohydrates, lipids and micronutrients present in the food formulation according to the present invention is given by the contribution of all the ingredients and not only, respectively, by at least one second ingredient or protein ingredient, by at least one first ingredient or main ingredient, by at least one third ingredient or lipidic ingredient and by the micronutrients itself.

This is because, being the present formulation composed of "real", natural, and not synthetic ingredients, each ingredient also includes a percentage of other macronutrients, as well as micronutrients, in addition to the main component contained into the ingredient itself, exactly as occurs in nature.

Therefore, the beneficial, nutritional and completeness effect of this formulation is given precisely by the synergy of all its components or ingredients.

Furthermore, the presence of the probiotic and the prebiotic together, in addition to the other ingredients, allows this formulation to play a protective role for the user's health, also able - as well as nourishing - to restore the metabolic and digestive balance of the user who takes the food formulation according to the present invention.

The food formulation according to at least one version of the invention is free of added sugars and/or sweeteners, both natural and artificial. "Added sugars" means all (simple) sugars that are added to foods during the steps of process or preparation of a food.

Furthermore, the food formulation according to the present invention can comprise at least one additional ingredient, dedicated to taste. This additional ingredient may vary depending on whether the food formulation is formulated to replace breakfast, snack and/or light meal, or lunch and dinner respectively.

For example, if the food formulation is suitable to replace breakfast, snack and/or light meal in use, it can comprise bitter cocoa to give it the taste of cocoa or chocolate.

An example of present ingredients that is present in the food formulation according to the invention, in the version wherein bitter cocoa is present, is given by way of example in Table 4 below. As regards the list of micronutrients present in it, reference can be made to what is indicated in table 3 for at least one version of this formulation. According to other versions, the food formulation can contain vanilla, spices, aromatic plants, etc.

Similarly, depending on the type of meal to be replaced, the food formulation may include dehydrated and/or freeze-dried fruit (peaches, apricots, mangoes, bananas, papayas, kiwis, strawberries, mixed berries, pear, apple, etc.) and/or dehydrated and/or freeze-dried vegetables (e.g. carrot, pumpkin, celery, spinach, etc.) and/or dried fruit (walnuts, hazelnuts, almonds, pine nuts, etc.), etc.

An example of ingredients that is present in the food formulation according to the invention, in the version in which vegetables are present (for example pumpkin and carrot), is shown as an example in Table 5 below. As regards the list of micronutrients present in it, reference can be made to what is indicated in Table 3 for at least one version of this formulation.

In the event that freeze-dried fruit and/or vegetables are used, the quantity to be included in the food formulation is less than in the case of dehydrated fruit and/or vegetables. Freeze drying, indeed, is qualitatively better and gives a more pronounced and clear taste than dehydration.

For example, on 100 grams of food formulation it is possible to add about 15 grams of dehydrated fruit, while it is sufficient to add 4-5 grams of freeze-dried fruit to have the same type of taste in the final product.

However, since it is a question of "taste", and therefore of a variable and undefined parameter, these quantities can be varied from case to case, according to the production needs and the final consumer.

The food formulation according to the present invention, therefore, in at least one version, it does not contain herbs, nor artificial nor natural, because the herb, the taste, the flavor are provided, as above mentioned, by ingredients exactly the same, "real" and not only by their herbs.

In this way the naturalness of food formulation is amplified and goes towards to requests more and more health enthusiast of the consumer.

Even, removing every flavoring, a product with a better of flavor is obtained, that meets the appreciation of the user.

The flavor of the several versions of the food formulation according the invention is therefore given by real ingredients and constitutes a further important element in term of quality of the raw material and nutritional quality, of the food formulation itself.

According at least one version of the invention, instead, it is possible that the herbs and/or essences are added, wanting preferably natural, when the dehydrated or freeze-dried ingredient has a taste too faint (as it can be to obtain for example blueberry taste or similar to it).

According to at least one version of the invention, moreover, the food formulation is lacking both natura and artificial preservative and/or stabilizers.

The food formulation according to at least one version of the invention is completely vegetable origin or contains exclusively ingredients of vegetable origin.

In the Table 2, reported below, are specified ingredients of one version of the food formulation (for example called as taste "Oat") according to the invention and in the Table 3 is specified the nutritional value of the food formulation according to the invention and/or the formulation of Table 2.

Table 2: Example of list of the ingredient of a version of the food formulation (on a portion of 100gram).

| Ingredient | Quantity (grams) |
|---|---|
| Oats | 49,8 |
| Pea protein | 17,5 |
| Vegetable fiber fructo-oligosaccharides (FOS) | 15 |
| Coconut fat | 7,5 |
| Rice protein | 3,5 |
| Linseeds | 3 |
| Potassium citrate 12% | 1,1 |
| Borage oil | 1 |
| Anhydrous disodium sodium phosphate | 0,64 |
| Calcium and/or magnesium or dolomite (30% calcium-20% magnesium) | 0,53 |
| Sodium chloride | 0,27 |
| Choline bitartrate | 0,15 |
| Bacillus subtilis | 0,0075 |
| Iron gluconate 12% | 0,023 |
| Vitamin C (ascorbic acid) or Myrciaria dubia (Kunth) Mc Vaugh dry extract fruit titrated 50% in vitamin C (or camu camu dry extract) | 0,016 or 0,032 |
| 10% water dispersible beta-carotene or Vitamin A | 0,015 or 0,000128 |
| Zinc gluconate 13% | 0,015 |

(continued)

| Ingredient | Quantity (grams) |
|---|---|
| Yeast enriched with selenium 0.2% | 0,055 |
| Vitamin E alpha tocopheryl acetate 50% VITAMIN E | 0,0048 |
| Manganese gluconate 12% | 0,0033 |
| Vitamin B3 nicotinamide 100% | 0,0032 |
| Sodium molybdate dihydrate | 0,0025 |
| Copper gluconate | 0,0014 |
| Calcium d-pantothenate vitamin B5 100% PANTOTHENIC ACID | 0,0012 |
| Vitamin D3 (cholecalciferol) from lichen (Cladonia rangiferina) | 0,0004 |
| Pyridoxine hydrochloride vitamin B6 83% VITAMIN B6 | 0,00034 |
| Vitamin K1 | 0,0003 |
| Riboflavin vitamin B2 100% | 0,00028 |
| Thiamine hydrochloride vitamin B1 99.9% | 0,00022 |
| Chromium picolinate | 0,000064 |
| Folic acid vitamin B9 100% | 0,00004 |
| Potassium iodide | 0,000039 |
| Vitamin B8 biotin 100% | 0,00001 |
| Cyanocobalamin Vitamin B12 100% | 0,00000048 |

Table 3: Nutritional Table of the food formulation according to the present invention and/or according to the version of Table 2 (on a portion of 100gram).

| | |
|---|---|
| Kcal | 400 |
| Fats | 10,9 grams |
| Of which saturated | 6,0 grams |
| Proteins | 24,4 grams |
| Carbohydrates | 43,4 grams |
| Of which sugars | 3,3 grams |
| Salt | 0,04 grams |
| Potassium | 400 mg (20% NRVs) |
| Calcium | 160 mg (20% NRVs) |
| Chloride | 160 mg (20% NRVs) |
| Choline Bitartrato | 150 mg |
| Phosphorus | 140 mg (20% NRVs) |
| Magnesium | 106 mg (20% NRVs) |
| Vitamin C | 16 mg (20% NRVs) |
| Bacillus subtilis | 7,5 mg |
| Iron | 2,7 mg (20% NRVs) |
| Vitamin E | 2,4 mg (20% NRVs) |
| Zinc | 1,95 (20% NRVs) |

(continued)

| Beta carotene | 1,5 mg |
|---|---|
| Vitamin B5 | 1,2 mg (20% NRVs) |
| Vitamin B3 | 0,512 mg (20% NRVs) |
| Manganese | 0,396 mg (20% NRVs) |
| Vitamin B6 | 285 mcg (205% VNRs) |
| Vitamin B2 | 280 mcg (20% VNRs) |
| Vitamin B 1 | 220 mcg (20% NRVs) |
| Copper | 0,2 mg (20% NRVs) |
| Vitamin B9 | 40 mcg (20% NRVs) |
| Iodine | 30 mcg (20% NRVs) |
| Vitamin K 1 | 15 mcg (20% NRVs) |
| Selenium | 11 mcg (20% NRVs) |
| Molybdenum | 10 mcg (20% NRVs) |
| Vitamin B8 | 10 mcg (20% NRVs) |
| Chromium | 8 mcg (20% NRVs) |
| Vitamin D3 | 1 mcg (20% NRVs) |
| Vitamin B12 | 0,5 mcg (20% NRVs) |
| NRVs = Nutrient Reference Values; 1 mcg = $10^{-4}$ centigram | |

Table 4: Example of the list of ingredients of a version of the food formulation (for example as "Cocoa" flavor, on a portion of 100 gram)

| Ingredient | Quantity (grams) |
|---|---|
| Oats | 47,2 or 47,4 |
| Pea protein | 14,4 |
| Vegetable fiber fructo-oligosaccharides (FOS) | 14,4 |
| Coconut fat | 6,0 |
| Linseeds | 3,5 |
| Borage oil | 3 |
| Cocoa | 1 |
| Bacillus subtilis | 7,5 |
| Micronutrient (e.g. 27 micronutrients including vitamins and minerals) | 2,7775 o 2,8 |

Table 5: Example of the list of ingredients of a version of the food formulation (for example as "Pumpkin-carrot" flavor, on a portion 100 gram)

| Ingredient | Quantity (grams) |
|---|---|
| Oats | 49,8 |
| Pea protein | 17,5 |
| Coconut fat | 6,0 |

(continued)

| Ingredient | Quantity (grams) |
|---|---|
| Rice protein | 3,5 |
| Linseeds | 3 |
| Borage oil | 1 |
| Carrot | 12 |
| Pumpkin | 4,5 |
| Bacillus subtilis | 0,0075 |
| Micronutrient (e.g. 27 micronutrients including vitamins and minerals) | 2,7725 or 2,8 |

Naturally, the above reported tables are only indicative and could undergo variations if for example a different probiotic agent is used.

As mentioned, the food formulation according to the present invention is in the form of powder or drink (for example water or other food liquid such as orange juice, tea, coffee, fruit and/or vegetable smoothie, etc. in which the powder is dissolved).

If the food formulation is in powder form, it can be easily prepared before use by dissolving and/or mixing the powder in the appropriate liquid chosen by the user. If it is in the form of drink, it is ready for use. In this case, often the food formulation is already dosed to replace a meal of the user.

Nutritional completeness, compliance with the requirements of the Mediterranean Diet, energy efficiency, the absence of added sugars and sweeteners, the presence of quality fatty acids such as omega 3 and omega 6, the absence - in at least one version - preservatives and stabilizers, and especially the presence of probiotic agents and prebiotic components, are all points that provide the food formulation according to the present invention with a high nutritional quality and completeness, which allows users to eat in a healthy, complete, balanced and equilibrate. Furthermore, it is a ready-made or easily preparable preparation in a short time and with few elements available, so that it can be taken at any time of day and in any environment.

The present invention also refers to a method for the preparation of the food formulation according to the present invention.

This method involves a step of providing at least a first ingredient or main ingredient, at least a second ingredient or protein ingredient, at least a third ingredient or lipidic ingredient and a series of micronutrients comprising at least one vitamin and/or at least one mineral, as well as providing at least a probiotic agent and at least one prebiotic component.

These ingredients correspond to those previously described.

This method then provides to reduce at least one of the indicated ingredients to powder or flour, i.e. at least one of at least a second ingredient or protein ingredient, at least a first ingredient or main ingredient, at least a third ingredient or lipidic ingredient and at least one prebiotic component and/or optionally to provide micronutrients comprising at least one vitamin and/or at least one mineral, in the form of powder.

According to the present invention, the method provides to provide at least one probiotic agent in the form of spores and/or micro-capsules. This step may therefore include a previous step of micro-encapsulating at least one probiotic agent according to technologies known in the field.

The method can therefore include a step of supplying the above-mentioned ingredients according to the percentages indicated above and/or dosing a certain dose or portion of powder of the food formulation in question.

A further step is to provide, optionally, at least one additional ingredient and/or to reduce such at least one additional ingredient to powder or flour.

A subsequent step can include dissolving and/or diluting the powder in a certain dose or amount of water or other food liquid, depending on the preferences of the user.

For example, the step of dissolving and/or diluting can take place by mixing and/or stirring, for example for 30 seconds up to one minute.

For a given dose of powder, it can add, for example, 300 ml of water or food liquid.

In this way, it is possible for the user to take (i.e. drink or eat) the food formulation thus produced in order to replace a daily traditional meal.

It has thus been seen how the present invention can adapt to the specific needs of the user and of the diet of recent times, providing a food formulation of easy and practical use, which allows the intake of all the nutrients necessary to supply energy in a balanced and complete way, without burdening the user, responding to the requests indicated above.

Features described for an embodiment or variant may also be present in other embodiments or variants, without thereby departing from the scope of protection determined by the attached claims.

The food formulation according to the present invention is susceptible of numerous modifications and variations within the scope of protection of the following claims.

The present invention also relates to the following points, for each of which the Applicant reserves the right to file a divisional application.

Food formulation, as described above, wherein said food formulation comprises only ingredients of vegetable origin.

Food formulation, as described above, wherein said food formulation provides about 400-450 kcal, for example corresponding to about 20% of the daily energy requirement estimated at about 2000-2200 kcal/day.

Food formulation, as described above, comprising an additional ingredient such as bitter cocoa, dehydrated fruit, freeze-dried fruit, dehydrated vegetable, freeze-dried vegetable, dried fruit, a mixture thereof, etc.

**Claims**

1. Food formulation suitable in use for replacing a daily meal of a user, wherein said formulation is in the form of a powder or drink comprising a food liquid in which said powder is dissolved, comprising at least one first ingredient or main ingredient, which substantially constitutes a main source of carbohydrates for said food formulation, at least a second ingredient or protein ingredient, which substantially constitutes a prevalent source of proteins for said food formulation, at least a third ingredient or lipidic ingredient, which constitutes a source of lipids for said formulation food, and micronutrients comprising at least one vitamin and/or at least one mineral, **characterized in that** said food formulation comprises at least one probiotic agent and at least one prebiotic component and by the fact that said formulation comprises: carbohydrates for 45-65% of the daily energy requirement of carbohydrates, of which simple sugars less than 15%, lipids or fats for 25-35% of the daily energy requirement of lipids, and said micronutrients for at least 20% of the Nutrient Reference Values (NRVs).

2. Food formulation according to claim 1, wherein said at least one first ingredient or main ingredient comprises at least oats or an oatmeal, maltodextrin for example from corn, rice, rice flour, trehalose, goji flour, moringa, moringa flour, tapioca, etc., and/or consists of oats or oatmeal.

3. Food formulation according to claim 1 or 2, wherein said at least one third ingredient or lipidic ingredient comprises at least one polyunsaturated fatty acid, such as for example an $\alpha$-linolenic acid (omega 3) and/or a linoleic acid (omega 6), and/or linseed and/or borage oil, and/or coconut fat, sunflower oil, rapeseed oil, dried fruit powder such as almonds, walnuts, hazelnuts, etc.

4. Food formulation according to any one of the preceding claims, wherein said at least one protein ingredient comprises at least one of peas, legumes, beans, chickpeas, lentils, lupins, broad beans, proteins isolated from peas or chickpeas or lupins or beans or lentils or broad beans, rice proteins, oat proteins, soy proteins, chickpeas proteins, spirulina, etc.

5. Food formulation according to any one of the preceding claims, wherein said at least one vitamin comprises at least one of Vitamin C or Myrciaria dubia (Kunth) Mc Vaugh dry extract fruit titrated 50% in vitamin C, vitamin E or alpha tocopheryl acetate for example 50 %, choline bitartrate or Vitamin J, at least one vitamin of the group B such as vitamin B3, for example nicotinamide 100%, vitamin B5 or pantothenic acid for example d-pantothenate calcium or vitamin B5 100%, vitamin B6 or pyridoxine hydrochloride or vitamin B6 for example 83%, vitamin B2 or riboflavin, vitamin B1 or thiamine hydrochloride or vitamin B1 for example 99.9%, vitamin B9 or folic acid or vitamin B9 100%, vitamin B8 or biotin 100%, vitamin B12 or cyanocobalamin or vitamin B12 100%, vitamin A and/or precursors of vitamin A such as beta-carotene for example 10% hydro-dispersible, vitamin K1, vitamin D, vitamin D3, etc. or a mixture thereof.

6. Food formulation according to any one of the preceding claims, wherein said at least one mineral comprises at least one of potassium, potassium citrate for example 12%, calcium, magnesium, dolomite, dolomite (30% calcium-20% magnesium), iron, iron gluconate for example 12%, zinc, zinc gluconate for example 13%, manganese, manganese gluconate for example 12%, selenium, yeast enriched with selenium 0.2%, chromium, copper, chlorine, phosphorus, molybdenum, iodine, etc. or a mixture thereof.

7. Food formulation according to any one of the preceding claims, wherein said probiotic agent comprises at least one of a probiotic agent in the form of spores and/or microencapsulated, for example in an organic capsule, Bacillus coagulans, Bacillus subtilis, Bifidobacterium Lactis, Lactobacillus rhamnosus, etc. or one mixture thereof.

8. Food formulation according to any one of the preceding claims, wherein said at least one prebiotic component comprises at least one of natural fiber, vegetable fiber, soluble fiber, soluble fiber of vegetable origin, food fiber, at least one short-chain fatty acid (SCFA) such as acetate, propionate, butyrate, lactate, at least one vegetable derivative, at least one MAC (microbiota-accessible carbohydrate), such as for example at least one FOS (fructo-oligosaccharides), beta-glucan, inulin, GOS (galacto-oligosaccharides), pectin, resistant starch, etc. or a mixture thereof.

9. Food formulation according to any one of the preceding claims, wherein said formulation has the subdivision of typical macronutrients and micronutrients of the Mediterranean Diet and/or wherein said formulation includes: proteins comprised between 10% and 30% or for at least 10-15% or for at least 20-25% and/or up to 25-30% of the daily energy requirement of protein.

10. Food formulation according to any one of the preceding claims, wherein said at least one first ingredient or main ingredient constitutes 45-55% or preferably about 50% by weight of the dry weight of said food formulation and/or said at least one second ingredient or protein ingredient constitutes 15-25% or preferably about 20% by weight of the dry weight of said food formulation and/or said at least one third ingredient or lipidic ingredient constitutes 7-15% or preferably about 10-11% by weight of the dry weight of said food formulation and/or said at least one prebiotic component constitutes 10-20% or preferably about 15% by weight of the dry weight of said food formulation and/or said micronutrients constitute the remaining part of said food formulation and/or said at least one vitamin comprises from 0.1 to 0.5% by weight on the dry weight of said food formulation and/or said at least one mineral constitutes 0.5-3% or preferably 1.5-2% by weight on the dry weight of said food formulation.

11. Method for the preparation of a food formulation according to one or more of claims from 1 to 10, wherein this method involves the steps of:
providing at least a first ingredient or main ingredient, which substantially constitutes a main source of carbohydrates for said food formulation, at least a second ingredient or protein ingredient, which substantially constitutes a prevalent source of protein for said food formulation, at least a third ingredient or lipidic ingredient, which constitutes a source of lipids for said food formulation, and micronutrients comprising at least one vitamin and/or at least one mineral, wherein said formulation comprises:

carbohydrates for 45-65% of the daily energy requirement of carbohydrates, of which simple sugars less than 15%, lipids or fats for 25-35% of the daily energy requirement of lipids, and said micronutrients for at least 20% of the Nutrient Reference Values (NRVs),
providing at least one probiotic agent and at least one prebiotic component,
reducing to powder or flour at least one of the ingredients indicated between said at least one first ingredient or main ingredient, said at least one second ingredient or protein ingredient, said at least a third ingredient or lipidic ingredient, and at least one prebiotic component and/or
supplying said micronutrients in the form of powder.

12. Method according to claim 11, comprising a step of providing said at least one probiotic agent in the form of spores and/or micro-capsules and/or a step of micro-encapsulating said at least one probiotic agent.

13. Method according to claim 11 or 12, comprising a step of dosing a powder quantity of said food formulation and/or wherein said step of providing comprises providing said at least one first ingredient or main ingredient constituting 45-55% or of preferably about 50% by weight of the dry weight of said food formulation and/or said at least one second ingredient or protein ingredient constituting 15-25% or preferably about 20% by weight of the dry weight of said food formulation and/or said at least one third ingredient or lipidic ingredient constituting 7-15% or preferably about 10-11% by weight of the dry weight of said food formulation and/or said at least one prebiotic component constituting 10-20% or preferably about 15% by weight of the dry weight of said food formulation and/or said micronutrients constituting the remaining part of said food formulation and/or said at least one vitamin constituting from 0.1 to 0.5% by weight on the dry weight of said food formulation and/or said at least one mineral constituting 0.5-3% or preferably 1.5-2% by weight on the dry weight of said food formulation.

14. Method according to any one of claims from 11 to 13, comprising a step of providing at least one additional ingredient and/or reducing said at least one additional ingredient to powder or flour and/or dissolving and/or diluting said powder with water or other food liquid to obtain a drink.

**15.** Use of the food formulation according to any one of claims from 1 to 10 to replace at least one of the daily meals for a user.

Europäisches
Patentamt

European
Patent Office

Office européen
des brevets

# EUROPEAN SEARCH REPORT

Application Number

EP 21 15 9803

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DATABASE GNPD [Online]<br>MINTEL;<br>19 February 2020 (2020-02-19),<br>Nativa: "Chocolate Flavoured Meal in a Glass",<br>XP055806740,<br>Database accession no. 7269409<br>* abstract * | 1-15 | INV.<br>A23L33/00 |
| X | DATABASE GNPD [Online]<br>MINTEL;<br>25 March 2020 (2020-03-25),<br>Sequel Natural: "All-In-One Chocolate Flavoured Shake",<br>XP055806745,<br>Database accession no. 7455183<br>* abstract * | 1,3-15 | |
| X | DATABASE GNPD [Online]<br>MINTEL;<br>22 September 2020 (2020-09-22),<br>Foodspring: "Cookies & Cream Flavoured Meal Replacement for Weight Control",<br>XP055806749,<br>Database accession no. 8121849<br>* abstract * | 1,2,4-9, 11-15 | TECHNICAL FIELDS SEARCHED (IPC)<br><br>A23L |
| X | WO 2015/184401 A1 (BEACHBODY LLC [US])<br>3 December 2015 (2015-12-03)<br>* abstract *<br>* page 8 *<br>* pages 14-18 *<br>* page 22 *<br>* claims 1-8 * | 1-9, 11-15 | |

-/--

The present search report has been drawn up for all claims

| Place of search | Date of completion of the search | Examiner |
|---|---|---|
| Munich | 15 June 2021 | de La Tour, Camille |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

**EUROPEAN SEARCH REPORT**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | WO 2006/098644 A1 (SAPPORO HOLDINGS LTD [NZ]; RYAN GLENDA [NZ]) 21 September 2006 (2006-09-21) * abstract * * claims 1,4,11,12,17,18,20,28 * ----- | 1-15 | |
| A | WO 2012/051591 A2 (ASHA LIPID SCIENCES INC [US]; BHAGAT URVASHI [US]) 19 April 2012 (2012-04-19) * abstract * * paragraph [0002] * * paragraph [0119] * * claims 1-28 * ----- | 1-15 | |

TECHNICAL FIELDS
SEARCHED       (IPC)

The present search report has been drawn up for all claims

| Place of search | Date of completion of the search | Examiner |
|---|---|---|
| Munich | 15 June 2021 | de La Tour, Camille |

EPO FORM 1503 03.82 (P04C01)

## ANNEX TO THE EUROPEAN SEARCH REPORT
## ON EUROPEAN PATENT APPLICATION NO.

EP 21 15 9803

This annex lists the patent family members relating to the patent documents cited in the above-mentioned European search report.
The members are as contained in the European Patent Office EDP file on
The European Patent Office is in no way liable for these particulars which are merely given for the purpose of information.

15-06-2021

| Patent document cited in search report | | Publication date | Patent family member(s) | | Publication date |
|---|---|---|---|---|---|
| WO 2015184401 | A1 | 03-12-2015 | US | 2015342237 A1 | 03-12-2015 |
| | | | US | 2018338518 A1 | 29-11-2018 |
| | | | WO | 2015184401 A1 | 03-12-2015 |
| WO 2006098644 | A1 | 21-09-2006 | AU | 2006223701 A1 | 21-09-2006 |
| | | | GB | 2438574 A | 28-11-2007 |
| | | | JP | 4981021 B2 | 18-07-2012 |
| | | | JP | 2008532543 A | 21-08-2008 |
| | | | JP | 2012135315 A | 19-07-2012 |
| | | | JP | 2015083009 A | 30-04-2015 |
| | | | US | 2009220649 A1 | 03-09-2009 |
| | | | WO | 2006098644 A1 | 21-09-2006 |
| WO 2012051591 | A2 | 19-04-2012 | AU | 2011315835 A1 | 02-05-2013 |
| | | | BR | 112013008699 A2 | 21-06-2016 |
| | | | CA | 2814053 A1 | 19-04-2012 |
| | | | CN | 103260437 A | 21-08-2013 |
| | | | CO | 6700861 A2 | 28-06-2013 |
| | | | EA | 201390438 A1 | 29-11-2013 |
| | | | EP | 2627197 A2 | 21-08-2013 |
| | | | IL | 225574 A | 26-09-2019 |
| | | | JP | 2013541108 A | 07-11-2013 |
| | | | JP | 2018005928 A | 11-01-2018 |
| | | | JP | 2021051749 A | 01-04-2021 |
| | | | KR | 20130140715 A | 24-12-2013 |
| | | | KR | 20190092600 A | 07-08-2019 |
| | | | NZ | 610282 A | 25-11-2016 |
| | | | SG | 189855 A1 | 28-06-2013 |
| | | | SG | 10201600295U A | 26-02-2016 |
| | | | US | 2013261183 A1 | 03-10-2013 |
| | | | WO | 2012051591 A2 | 19-04-2012 |
| | | | ZA | 201302991 B | 27-08-2014 |

EPO FORM P0459

For more details about this annex : see Official Journal of the European Patent Office, No. 12/82